# EUROPÄISCHE PATENTSCHRIFT

(11) **EP 1 755 808 B1**
(45) Veröffentlichungstag und Bekanntmachung des Hinweises auf die Patenterteilung: **09.01.2008**
(21) Anmeldenummer: 05716058.2
(22) Anmeldetag: 15.03.2005
(51) Int. Cl.: B22D 11/053, F16F 1/368, F16F 1/18

(54) **OSZILLATIONSVORRICHTUNG FÜR STRANGGIESSKOKILLEN ZUM GIESSEN VON FLÜSSIGEM METALL, INSBESONDERE VON FLÜSSIGEM STAHLWERKSTOFF**
OSCILLATING DEVICE FOR CONTINUOUS CASTING MOLDS FOR CASTING MOLTEN METAL, PARTICULARLY MOLTEN STEEL MATERIAL
DISPOSITIF OSCILLANT POUR COQUILLES DE COULEE CONTINUE POUR COULER DU METAL LIQUIDE, NOTAMMENT UN MATERIAU D'ACIER LIQUIDE

(30) Priorität: 16.04.2004 DE 102004018602
(43) Veröffentlichungstag der Anmeldung: 28.02.2007
(73) Patentinhaber: SMS Demag Aktiengesellschaft, 40237 Düsseldorf (DE)
(72) Erfinder: VON WYL, Horst, 47169 Duisburg (DE); HOFFMEISTER, Jörn, 47443 Moers (DE); KRAUSA, Alfons, 46514 Schermbeck (DE); SNADNY, Ulrich, 45739 Oer-Erkenschwick (DE); SCHUSTER, Ingo, 47877 Willich (DE)
(74) Vertreter: Klüppel, Walter
(86) Internationale Anmeldenummer: PCT/EP2005/002721
(87) Internationale Veröffentlichungsnummer: WO 2005/105341

(56) Entgegenhaltungen:
- EP-A- 0 162 191
- EP-A- 0 425 880
- EP-A- 0 953 391
- EP-A- 1 086 762
- DE-A1- 2 248 066
- DE-A1- 10 022 598
- DE-C1- 4 341 719

## Beschreibung

Die Erfindung betrifft eine Oszillationsvorrichtung für Stranggießkokillen zum Gießen von flüssigem Metall, insbesondere von flüssigem Stahlwerkstoff, mit mehreren zwischen einem ortsfesten Kokillenrahmen und Anlenkungs- bzw. Einspannstellen verlaufenden, die Stranggießkokille tragenden und in geregelte Schwingungen, wie bspw. Resonanzschwingungen, mittels Antriebspaaren versetzenden Federn oder Federpaketen.

Es sind Oszillationsvorrichtungen bekannt, die mittels Stahl-Blattfedem am feststehenden Rahmen angelenkt sind. Die Blattfedern werden dauerfest ausgelegt. In der Regel arbeiten solche Blattfeder-Anlenkungen für eine längere Betriebszeit ohne Wartung. Die Stranggießkokille ist pro Seite mit zwei Blattfedern in dem ortsfesten Rahmen geführt. Die Blattfedern tragen die Stranggleßkokille durch ihre Federkraft. Diese Bauweise bildet eine spielfreie Aufhängung und benötigt auch keine wartungsintensiven Lagerungen. Die Führung der Stranggießkokille zur vorgegebenen Bahn und Lage ist ohne Mängel. Die Blattfedern üben jedoch einen großen Einfluss auf die Schwingungsformen aus, weil die Federkonstanten sehr groß sein müssen, um das Gewicht der Stranggießkokille zu tragen. Im einfachen Fall kann eine sinusförmige Schwingungsform mit der Frequenz der Eigenresonanz des Feder - Masse-Systems ausgeführt werden. Vorteilhaft ist die definierte Führung der Stranggießkokille mit einer sehr steifen Blattfeder. Bei Schwingungsfrequenzänderungen oder bei sehr langem Einsatz kann es zu großen, unter Umständen nicht mehr beherrschbaren Reaktionskräften kommen, die das System überbeanspruchen. Außerdem sind solche Stahl-Blattfeder-Systeme einer erheblichen Korrosion ausgesetzt und diese ist maßgeblich am Versagen beteiligt. Bisher wurden nur Federn aus Stahl und verschiedenen Korrosionsschutzschichten verwendet. Die Beschichtung ist aber immer mechanisch empfindlicher als der Grundwerkstoff. Die Verwendung von Edelstahl führte ebenfalls nicht zur Beseitigung der Nachteile. Eine befriedigende Erklärung der auftretenden Brüche konnte bisher nicht gefunden werden, geschweige denn wirkungsvolle Maßnahmen zur Verhinderung des Versagens.

Aus den Dok. EP 0 953 391 A, DE 100 22 598 A, DE 43 41 719 C1, EP 1 086 762 A und DE 22 48 066 A sind Oszillationsvorrichtungen bekannt, bei denen die Stranggießkokille über Blatt- bzw. Tellerfedern schwingbar aufgehängt ist. Der Fachmann auf diesem Gebiet setzt Federstahl als Werkstoff für die Federn voraus.

Aus dem Dok. EP 0 162 191 A und EP 0 425 880 A sind Faserverbundwerkstoffe, jedoch zur Verwendung in Kraftfahrzeugen bekannt.

Der Erfindung liegt die Aufgabe zugrunde, unter Vermeidung der beschriebenen Nachteile, eine auf längere Zeit standfeste Blattfeder-Oszillationsvorrichtung zu schaffen, die für das Gießen von flüssigem Stahl bei entsprechenden Schwingungsformen insofern besser geeignet sind, als die Korrosionsbeständigkeit, die Dauerstandsfestigkeit und die mechanische Beständigkeit im Vergleich zu Stahlfedern verbessert werden.

Die gestellte Aufgabe wird erfindungsgemäß gelöst durch die Anwendung von Federn, Federpaketen oder Federbündeln aus Faserverbundwerkstoffen, die aus in Kunststoffen als Matrixwerkstoff gebundene Kohle- oder Aramidfasern (CFK, AFK) bestehen, für Arbeitstemperaturen von ca. 20 °C. Die Vorteile sind hohe Korrosionsbeständigkeit, hohe Dauerstandsfestigkeit und mechanische Beständigkeit bei gegebener Steifigkeit und mit mechanischen Eigenschaften ähnlich denen von Federstahl. Die Faserverbundwerkstoffe vermeiden Korrosionsgefahren. Dadurch tritt keine vor zeitige Schwächung des Blattfeder-Querschnitts ein: Von Vorteil ist der Schutz gegen die im Stranggießen verwendeten Chemikalien. Außerdem ist bei der Herstellung auch möglich, von einem Rechteckquerschnitt abweichende Querschnittsformen in Abhängigkeit der Länge herzustellen. Die grundsätzliche Gestaltung der Resonanz-oszillationen, die sich in den letzten Jahren bewährt hat, kann erhalten bleiben.

Eine Ausgestaltung sieht vor, dass einzelne oder alle Federn, Federpakete oder Federbündel aus Faserverbundwerkstoffen hergestellt sind.

Dabei können nach weiteren Merkmalen die Federn, Federpakete oder Federbündel ohne oder mit einer Beschichtung ausgeführt sein.

Eine andere alternative Zusammensetzung besteht darin, dass als Matrixwerkstoff Kohlenstoff verwendet ist.

Um eine übermäßige Kraftübertragung an den Einspannstellen zu vermeiden, wird vorgeschlagen, dass die Enden der Federn, Federpakete oder der Federbündel wechselsinnig umgebördelt und in die Einspannstelle eingeklinkt sind.

Ein mechanischer Schutz, der auch gegen eine überhöhte thermische Belastung wirkt, wird dadurch geschaffen, dass die Federn, Federpakete oder Federbündel eingehaust oder mit einer dünnen keramischen Beschichtung geschützt sind.

Bei solchen Konstruktionen, die die Gefahr des Überlaufens von flüssigem Stahl im Bereich der Federanlenkung in sich bergen, ist es weiter vorteilhaft, dass die Federn, Federpakete oder Federbündel aus einem Faserverbundwerkstoff mit in dem Matrixwerkstoff integrierten keramischen Bestandteilen (CSIC) hergestellt sind.

Eventuell erforderliche Anbau- oder Zubehörteile können dadurch berücksichtigt werden, dass zur Einhaltung eines Mindestabstandes zwischen mehreren Federn, Federpaketen oder Federbündeln Zwischenlagen einlaminiert sind.

In der Zeichnung sind Ausfühmngsbeispiele der Erfindung dargestellt, die nachstehend näher erläutert werden.

Es zeigen:
- Fig. 1: eine perspektivische Darstellung des Rahmens mit Wasserkästen und den Blattfedern, jedoch ohne die (nur strichpunktiert angedeutete) Stranggießkokille selbst,
- Fig. 1A: eine Seitenansicht in Richtung "A" gegen die Feder-Befestigung,
- Fig. 2: einen Teilschnitt durch eine Anienkungs- bzw. Einspannstelle für die Federn, Federpakete bzw. ein Federbündel und
- Fig. 3: einen Teilschnitt durch eine alternative Ausführungsform der Anlenkungs- bzw. Einspannstelle für Federn mit einer einlaminierten Zwischenlage.

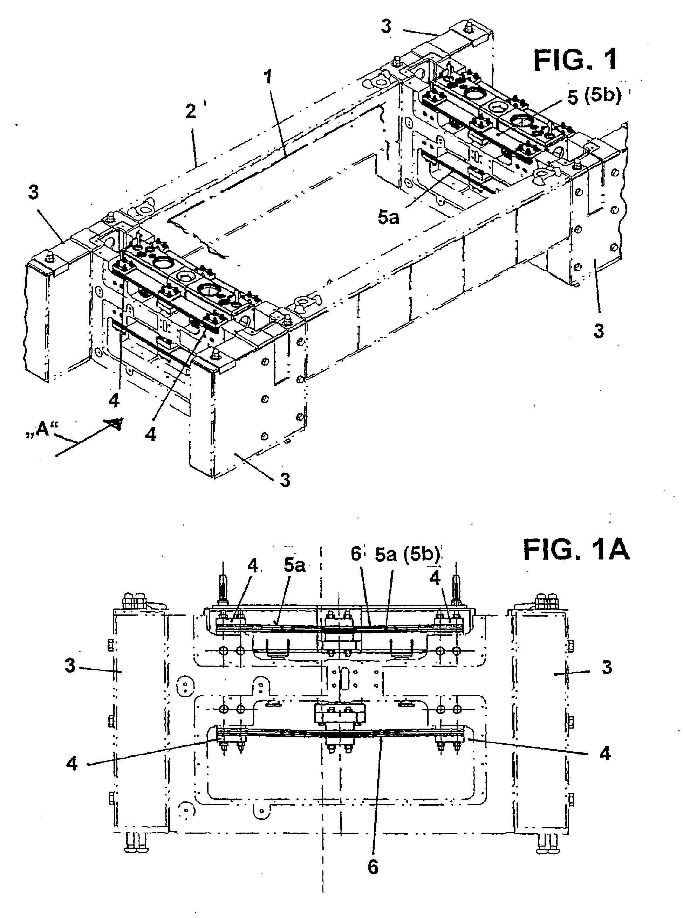

Gemäß den Fig. 1 und 1A ist eine Stranggießkokille 1 in einem ortsfesten Kokillenrahmen 2, der auch Wasserkästen 3 für die Zu- und Abfuhr von Kühlwasser trägt, schwingungsfähig gelagert. Der Kokillenrahmen 2 weist an beiden Enden der rechteckigen Grundform jeweils obere und untere Paare von Anlenkungs- bzw. Einspannstellen 4 für Federn 5, Federpakete 5a oder Federbündel 5b auf, die als Blattfedern gezeichnet sind, jedoch jede andere polygonale, kreisrunde oder elliptische sich in Längsrichtung überwiegend erstreckende Querschnittsform aufweisen können. Die Federn 5 können dicht aufeinanderliegend ein Federpaket 5a oder ein Federbündel 5b bilden. Dabei ist die Anwendung von Federn 5, Federpaketen 5a oder Federbündeln 5b aus Faserverbundwerkstoffen 6 mit bei Arbeitstemperaturen von ca. 20 - 80 °C hoher Korrosionsbeständigkeit, hoher Dauerstandsfestigkeit, mechanischer Beständigkeit bei gegebener Steifigkeit und mit mechanischen Eigenschaften ähnlich denen von Federstahl vorteilhaft.

Der verwendete Faserverbundwerkstoff 6 besteht aus in Kunststoffen als Matrixwerkstoff gebundenen Kohle- oder Aramid-Fasern (CFK, AFK). Als Matrixwerkstoff kann auch Kohlenstoff verwendet werden.

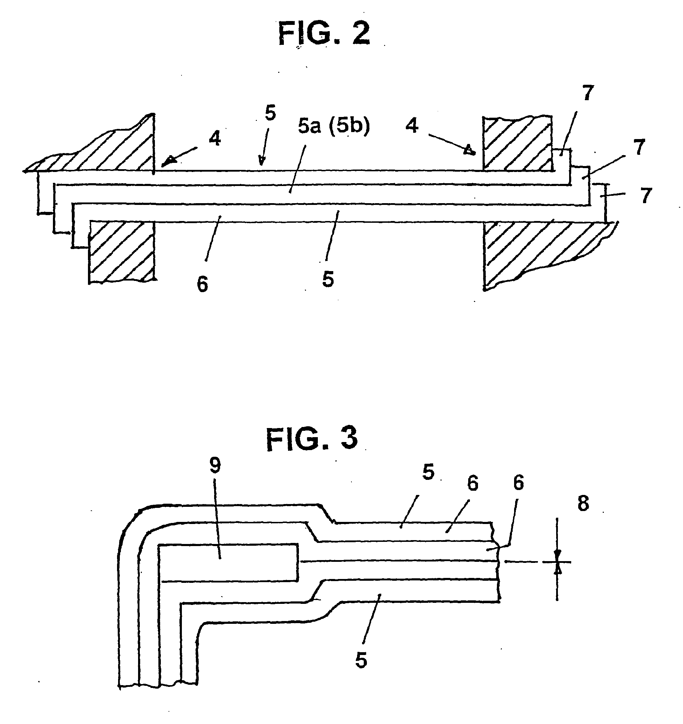

Gemäß Fig. 2 sind die Feder-Enden 7 der Federn 5, der Federpakete 5a oder der Federbündel 5b wechselsinnig umgebördelt und in die Einspannstelle 4 eingeklinkt.

Die Feder 5, das Federpaket 5a und das Federbündel 5b kann eingehaust oder mit einer dünnen keramischen Beschichtung geschützt sein.

Eine andere Ausführungsform sieht vor, dass die Federn 5, die Federpakete 5a oder die Federbündel 5b aus einem Faserverbundwerkstoff 6 mit in dem Matrixwerkstoff integrierten keramischen Bestandteilen (CSiC) hergestellt sind.

Gemäß Fig. 3 ist zur Einhaltung eines Mindestabstandes 8 zwischen mehreren Federn 5, Federpaketen 5a oder Federbündeln 5b eine Zwischenlage 9 einlaminiert.

Eine andere Gestaltung sieht einen zentralen Kern aus Polymerwerkstoff mit einer Abdeckung aus Faserverbundwerkstoffen 6 und mit einer Polymermatrix aus in einer Hauptrichtung verlaufenden Fasern vor. Der Querschnitt ist ähnlich einem Rechteck, einem Kreis oder einer Ellipse gestaltet.

Eine weitere Ausführungsform sieht eine runde oder rechteckige Rohrform vor, in die der Federkörper form- und kraftschlüssig eingesetzt ist. Dafür kann bspw. Glasfasergewebe vorgeformt und dann in das Rohr eingeschoben werden.

Der Querschnitt einer Feder 5 kann auch durch kreuzweise aufgelegte Laminatschichten und einem Glasfaserkern gebildet werden.

Faserverstärkte Kunststoffe können vor allen Dingen mit Zwischenschichten zu einer Feder 5 geformt werden, wobei härtbare Kunststoffe, bspw. ungesättigte Polyesterharze, modifizierte Epoxyharze, Polyurethanharze oder Mischungen aus solchen Stoffen verwendet werden.

Andere Werkstoffe für Zwischenschichten bilden Polyethylen, Polypropylen, Polyamide oder Polymethylmethacrylat und Elastomere. Diese Werkstoffe enthalten faserige Füllstoffe.

Eine zusätzliche Ausführungsform sieht ein Matrixmetall mit einer Verstärkung aus hochfesten, anorganischen Keramik- und / oder Metallfasern mit hohem Elastizitätsmodul vor.

### Bezugszeichenliste

- 1: Stranggießkokille
- 2: Kokillenrahmen
- 3: Wasserkasten
- 4: Anlenkungs- bzw. Einspannstelle
- 5: Feder
- 5a: Federpaket
- 5b: Federbündel
- 6: Faserverbundwerkstoff
- 7: Feder-Ende
- 8: Mindestabstand
- 9: Zwischenlage

## Patentansprüche

1. Oszillationsvorrichtung für Stranggießkokillen (1) zum Gießen von flüssigem Metall, insbesondere von flüssigem Stahlwerkstoff, mit mehreren zwischen einem ortsfesten Kokillenrahmen (2) und Anlenkungs- bzw. Einspannstellen (4) verlaufenden, die Stranggießkokille (1) tragenden und in geregelte Schwingungen, wie bspw. Resonanzschwingungen, mittels Antriebspaaren versetzenden Federn (5) oder Federpaketen (5a),
**gekennzeichnet durch**
die Anwendung von Federn (5), Federpaketen (5a) oder Federbündeln (5b) aus Faserverbundwerkstoffen (6), die aus in Kunststoffen als Matrixwerkstoff gebundene Kohle- oder Aramidfasern (CFK, AFK) bestehen, für Arbeitstemperaturen von ca. 20 -.80 °C.

2. Vorrichtung nach Anspruch 1,
**dadurch gekennzeichnet,**
**dass** einzelne oder alle Federn (5), Federpakete (5a) oder Federbündel (5b) aus Faserverbundwerkstoffen (6) hergestellt sind.

3. Vorrichtung nach einem der Ansprüche 1 oder 2,
**dadurch gekennzeichnet,**
**dass** die Federn (5), Federpakete (5a) oder Federbündel (5b) ohne eine Beschichtung hergestellt sind.

4. Vorrichtung nach Anspruch 1,
**dadurch gekennzeichnet,**
**dass** als Matrixwerkstoff Kohlenstoff verwendet ist.

5. Vorrichtung nach einem der Ansprüche 1 bis 4,
**dadurch gekennzeichnet,**
**dass** die Enden (7) der Federn (5), Federpakte (5a) oder Federbündel (5b) wechselsinnig umgebördelt und in die Einspannstelle (4) eingeklinkt sind.

6. Vorrichtung nach einem der Ansprüche 1 bis 5,
**dadurch gekennzeichnet,**
**dass** die Federn (5), der Federpakete (5a) oder Federbündel (5b) eingehaust oder mit einer dünnen keramischen Beschichtung geschützt sind.

7. Vorrichtung nach Anspruch 6,
**dadurch gekennzeichnet,**
**dass** die Federn (5), der Federpakte (5a) oder der Federbündel (5b) aus einem Faserverbundwerkstoff (6) mit in dem Matrixwerkstoff integrierten keramischen Bestandteilen (CSiC) hergestellt sind.

8. Vorrichtung nach einem der Ansprüche 1 bis 7,
**dadurch gekennzeichnet,**
**dass** zur Einhaltung eines Mindestabstandes (8) zwischen mehreren Federn (5), Federpaketen (5a) oder Federbündeln (5b) Zwischenlagen (9) einlaminiert sind.

## Claims

1. Oscillation device for continuous casting moulds (1) for casting liquid metal, particularly liquid steel material, with several springs (5) or spring packets (5a) which extend between a stationary mould frame (2) and articulation or clamping points (4) and carry the continuous casting mould (1) and which can be set into regulated oscillations, such as, for example, resonance oscillations, by means of drive couples, **characterised by** the use of springs (5), spring packets (5a) or spring bundles (5b) of fibre composite materials (6), which consist of carbon or aramide fibres bound in synthetic materials as matrix material (CFRP, AFRP), for working temperatures of approximately 20 to 80° C.

2. Device according to claim 1, **characterised in that** individual or all springs (5), spring packets (5a) or spring bundles (5b) are produced from fibre composite materials (6).

3. Device according to one of claims 1 and 2, **characterised in that** the springs (5), spring packets (5a) or spring bundles (5b) are produced without a coating.

4. Device according to claim 1, **characterised in that** carbon is used as matrix material.

5. Device according to one of claims 1 to 4, **characterised in that** the ends (7) of the springs (5), spring packets (5a) or spring bundles (5b) are flanged over in opposite sense and clipped into the clamping point (4).

6. Device according to one of claims 1 to 5, **characterised in that** the springs (5), the spring packets (5a) or spring bundles (5) are encased or are protected with a thin ceramic coating.

7. Device according to claim 6, **characterised in that** the springs (5), the spring packets (5a) or the spring bundles (5b) are produced from a fibre composite material (6) with ceramic components (CSiC) integrated in the matrix material.

8. Device according to one of claims 1 to 7, **characterised in that** intermediate layers (9) are laminated in place for maintenance of a minimum spacing (8) between several springs (5), spring packets (5a) or spring bundles (5b).

## Revendications

1. Dispositif oscillatoire pour lingotières de coulée continue (1) pour couler du métal liquide, notamment du matériau liquide sidérurgique, comportant plusieurs ressorts (5) ou ensembles de ressorts (5a) s'étendant entre un châssis de lingotière fixe (2) et des points d'articulation ou de montage (4), supportant la lingotière de coulée continue (1) et bougeant en vibrations régulées, comme par exemple des vibrations de résonance, à l'aide d'appariements moteurs,
**caractérisé par**
l'emploi de ressorts (5), d'ensembles de ressorts (5a) ou de groupes de ressorts (5b) en matériaux composites fibreux (6) qui sont composés de matières plastiques sous forme de fibres de carbone ou d'aramide liées en matériau matriciel (CFK, AFK) pour des températures opérationnelles d'environ 20 à 80° C.

2. Dispositif selon la revendication 1,
**caractérisé en ce que**
certains ou la totalité des ressorts (5), ensembles de ressorts (5a) ou groupes de ressorts (5b) sont fabriqués en matériaux composites fibreux (6).

3. Dispositif selon une des revendications 1 ou 2,
**caractérisé en ce que**
les ressorts (5), ensembles de ressorts (5a) ou groupes de ressorts (5b) sont fabriqués sans revêtement.

4. Dispositif selon la revendication 1,
**caractérisé en ce que**
on utilise comme matériau matriciel du carbone.

5. Dispositif selon une des revendications 1 à 4,
**caractérisé en ce que**
les extrémités des ressorts (5), ensembles de ressorts (5a) ou groupes de ressorts (5b) sont bridées alternativement et encliquetées dans le point de montage (4).

6. Dispositif selon une des revendications 1 à 5,
**caractérisé en ce que**
les ressorts (5), ensembles de ressorts (5a) ou groupes de ressorts (5b) sont gainés ou recouverts d'un revêtement céramique mince.

7. Dispositif selon la revendication 6,
**caractérisé en ce que**
les ressorts (5), ensembles de ressorts (5a) ou groupes de ressorts (5b) sont fabriqués en matériau composite fibreux (6) avec des composantes céramiques (CSiC) intégrées dans le matériau matriciel.

8. Dispositif selon une des revendications 1 à 7,
**caractérisé en ce que**,
pour respecter un écart minimal (8) entre plusieurs ressorts (5), ensembles de ressorts (5a) ou groupes de ressorts (5b), des couches intermédiaires (9) sont laminées à l'intérieur.
